# EUROPÄISCHE PATENTSCHRIFT

(11) **EP 3 110 715 B1**
(45) Veröffentlichungstag und Bekanntmachung des Hinweises auf die Patenterteilung: **11.07.2018**
(21) Anmeldenummer: 15703781.3
(22) Anmeldetag: 11.02.2015
(51) Int. Cl.: B65D 51/28

(54) **ABGABEVORRICHTUNG MIT EINER UMLAUFENDEN MANTELWAND**
DISPENSING DEVICE HAVING A PERIPHERAL OUTER WALL
APPAREIL DE DISTRIBUTION COMPORTANT UNE PAROI D'ENVELOPPE PÉRIPHÉRIQUE

(30) Priorität: 25.02.2014 CH 262142014
(43) Veröffentlichungstag der Anmeldung: 04.01.2017
(73) Patentinhaber: Mühlemann IP GmbH, 8260 Stein am Rhein (CH)
(72) Erfinder: MÜHLEMANN, Rolf, CH-8255 Schlattingen (CH)
(74) Vertreter: Schneider Feldmann AG Patent- und Markenanwälte
(86) Internationale Anmeldenummer: PCT/EP2015/052856
(87) Internationale Veröffentlichungsnummer: WO 2015/128189

(56) Entgegenhaltungen:
- WO-A1-2005/028322
- US-A1- 2010 237 075

## Beschreibung

Die vorliegende Erfindung betrifft eine Abgabevorrichtung mit einer umlaufenden Mantelwand, die einen rohrförmigen Abgaberaum mit einer Deckseite und einer Ausstossseite bildet, mit mindestens einer Kammer, die je mit mindestens einem flüssigen oder schüttfähigen, dosierten Stoff zur Abgabe füllbar ist.

Seit vielen Jahren bekannt sind Abgabevorrichtungen in Gestalt von Kapseln, die zur Abgabe ihres Inhaltes aufgerissen oder durchstossen werden, damit die dosierte Menge des Inhaltes abgegeben werden kann. Seit sehr langer Zeit bekannt, sind beispielsweise Kunststoffkapseln, die mit einer Aluminiumfolie verschlossen sind und entsprechend an einer überstehenden Lasche aufgerissen werden können. Solche Kapseln dienen beispielsweise der Abgabe von Kaffeesahne oder Salatsauce, Honig oder Marmelade oder viele andere Lebensmittel.

Solche Abgabevorrichtungen bestehen aber auch für technische Anwendungen, um beispielsweise vorgegebene Dossiermengen von Düngemittel, Pflanzenschutzmittel oder Insektiziden, die mit einem zweiten, in wesentlich grösserer Menge vorliegenden flüssigen Basis beigegeben werden.

Solche Abgabevorrichtungen dienen nicht nur der dosierten Abgabe von flüssigen oder schüttfähigen Stoffen, sondern dienen oftmals auch der Erhöhung der Haltbarkeit von Pharmazeutika oder Getränke, denen ein erhöhter Anteil an Vitaminen beigegeben wird oder anderen Wirkstoffen, die in wässriger Phase eine geringe Haltbarkeit haben, jedoch in Pulverform praktisch unbegrenzt aufbewahrt werden können. In solchen Fällen, werden solche Abgabevorrichtungen direkt mit einem Verschluss kombiniert und können beim Öffnen des Verschlusses oder vor dem Öffnen des Verschlusses bereits in die wässrige Phase eines Behälters abgegeben werden. Typische Beispiele solcher Möglichkeiten sind Flaschen für isotonische Getränke, in denen Vitamine in hoher Dosis und sonstige Wirkstoffe beigegeben werden.

Gerade bei solchen Anwendungen wird zum vorneherein festgelegt in welchem Mischverhältnis die wässrige Phase und der Beigabestoff sein sollen. Dies bedeutet, dass oftmals praktisch 99% Wasser und 1% Wirkstoff verkauft werden. Bei all solchen Lösungen werden diese Wirkstoffe in Kapsel oder kapselähnlicher Behältnisse abgepackt und mittels gewissen Durchstossern geöffnet. Diese Durchstosser sind beispielswiese Teil des Verschlusses, in dem die Kapsel untergebracht ist. Die Druckbeaufschlagung erfolgt dann praktisch mittig auf die Kapsel unter Zerstörung derselben. Hierzu sind die Durchstosser entsprechend speziell gestaltet, um sicherzustellen, dass die Folie der Kapseln nicht nur linear aufreissen und der Inhalt praktisch kaum ausfliessen kann, sondern dass die Kapselfolie möglichst in mehreren Richtungen von zentral nach radial aufreisst. Dies bedingt, dass die Kapsel selber aus einem relativ leicht reissbaren Material gefertigt ist, wie beispielsweise eine Aluminiumfolie. Da solche Aluminiumfolien natürlich auch ungewollt schnell zerstört sind, müssen die Kapseln gegen die Aussenwelt vollständig abgeschirmt sein. Dies ist bei Verschlüssen, bei denen solche Kapseln integriert sind, durchaus gegeben. Es bedingt aber, dass der Wirkstoff zusammen mit der wässrigen Phase verkauft wird, weil im Prinzip der Behälter an den der Verschluss mit der integrierten Kapsel angebracht ist, diese Kapsel zusätzlich auch schützt. Wäre der Behälter nicht vorhanden, so wäre dieser Schutz nicht mehr gegeben.

Auch die Zerstörung beziehungsweise Öffnung solcher Kapseln ist, wie bereits angetönt recht komplex. Je nach Material aus der die Kapsel ist, je dünnwandiger oder dickwandiger sie gestaltet ist, braucht es je nachdem völlig unterschiedliche Durchstoss-Perforier oder Schneidvorrichtungen um die Kapseln zu öffnen. So zeigt beispielsweise die DE 2010942 einen Schraubverschluss, der im oberen Bereich als Kapsel gestaltet ist und mit einer flexiblen Membran, die über einen an der Membran befestigten Ausstosser zerstörbar sein soll. In ähnlicher Weise arbeitet auch eine Lösung gemäss der WO 02/092440. Auch hier ist an der Unterseite einer gewölbten, flexiblen Membran ein Durchstosser angeordnet. Die Kapsel ist hier als auf den Behälterhals angeordneten Blisterverpackung realisiert.

Ein ähnliches System zeigt auch die WO 2007/017911. Unter einer abnehmbaren Kappe ist hier eine Blisterverpackung auf einem unteren Teil eines Verschlusses aufgeschweisst und aufgeklebt und diese Blisterverpackung drückt der Benutzer mit dem Finger selbst auf.

Eine weitere Lösung ist aus der EP 2186748 bekannt. Hier ist unterhalb der Deckfläche eines Verschlusses eine Kammer vorgesehen, die zur Aufnahme einer Tablette geeignet ist. Oberhalb der Tablette ist die Deckfläche des Verschlusses verformbar und wie der festen Tablette lässt sich die Folie, die den Raum abschliesst durchstossen.

Aus der US 2010/0237075 ist eine Abgabevorrichtung bekannt, die die Merkmale des Oberbegriffs des Anspruchs 1 aufweist. Letztlich ist auch noch aus der EP 1499535 eine Kapsel bekannt, die auf der Öffnung eines Behälters gehalten wird und in dem ein Durchstosser ruht, der nach Entfernung einer überdeckenden Schraubkappe betätigt wird und den Kapselboden mindestens annährend vollständig abtrennen soll.

All diese bekannten Lösungen haben erhebliche Nachteile. Ist der Ausstosser lediglich dornartig gestaltet, so ist die Wahrscheinlichkeit, dass dieser Dorn nach Durchstechung der Kapsel die Austrittsöffnung verstopft ausserordentlich gross. Ist jedoch der Inhalt in flüssiger oder schüttbarer Form anliegend, so lassen sich all jene Lösungen, die auf dem Prinzip der Blisterverpackungen funktionieren, nicht anwenden. Typischerweise geht man zudem immer davon aus, die den Aufnahmeraum versiegelnde Folie ganz oder vollständig zu zerstören. Dies bedingt je nach der Einwirkung des Aufstossers auf die entsprechende Folie mit mehr oder weniger Kraft verbunden. Zudem ist bei solchen Lösungen auch immer die Gefahr vorhanden, dass die Folie bei der Zerstörung so zerstört wird, dass Teile dieser Folie in den Behälter fallen, wobei dies ausser der Kontrolle des Benützers erfolgt.

Es ist daher die Aufgabe der vorliegenden Erfindung eine Abgabevorrichtung der eingangs genannten Art zu schaffen, die die zuvor beschriebenen Probleme nicht aufweist.

Diese Aufgabe löst eine Abgabevorrichtung gemäß Anspruch 1. Weitere vorteilhafte Ausführungsformen des erfindungsgemässen Gegenstandes gehen aus den abhängigen Ansprüchen hervor und deren Bedeutung und Wirkungswiese wird in der nachfolgenden Beschreibung anhand der beiliegenden Zeichnung erläutert. Es zeigt:
- Fig. 1: zeigt eine erste Ausführungsform einer erfindungsgemässen Abgabevorrichtung in perspektivischer Darstellung, schräg von unten im geschlossenen Zustand vor der Erstbenutzung, und
- Fig. 2: dieselbe Abgabevorrichtung im selben Zustand in einer Seitenansicht.
- Fig. 3: zeigt eine Ausführungsform mit zwei Kammern im ungefüllten Zustand unter Weglassung der abzustossenden, reissfesten Folie und
- Fig. 4: eine Abgabevorrichtung in der Darstellung gemäss der Figur 1 nach der Betätigung des Stössels, während,
- Fig. 5: dieselbe Abgabevorrichtung in der betätigten Position unter Weglassung der reissfesten Folie gezeigt ist.
- Fig. 6: eine Variante der Abgabevorrichtung entsprechend der Darstellung wie in Figur 5, die jedoch nur eine Kammer aufweist.
- Fig. 7: zeigt eine weitere Variante der Abgabevorrichtung bei der der Abgaberaum in spezieller Weise in drei Kammern unterteilt ist.
- Fig. 8: zeigt wiederum eine Seitenansicht der erfindungsgemässen Abgabevorrichtung, die hier jedoch als eine Variante in Form eines abschraubbaren Verschlusses gestaltet ist, und mit einem Deckel versehen ist und
- Fig. 9: zeigt diese Abgabevorrichtung von der Unterseite unter Weglassung der reissfesten Folie, wobei hier wiederum drei Kammern vorhanden sind, die jedoch eine gegenüber der Figur 7 anders gestaltete Unterteilung des Abgaberaumes aufweist.

Die Abgabevorrichtung ist insgesamt mit 1 bezeichnet. Die Abgabevorrichtung besitzt eine umlaufende Mantelwand 2, die einen Abgaberaum 3 begrenzt. Der Abgaberaum 3 ist rohrförmig, wobei der Querschnitt des rohrförmigen Abgaberaumes zylindrisch, oval oder auch mehreckig gestaltet sein kann. Der rohrförmige Abgaberaum 3 besitzt eine Deckseite 4 und eine gegenüberliegende Ausstossseite 5. Die Deckseite 4 kann durch eine getrennte Deckplatte 6 oder durch einen mit dem Abgaberaum 3 einstückig verbundenen Deckplatte 6 gestaltet sein. In der Deckplatte ist eine Öffnung entsprechend dem darunter befindlichen Führungskanal geformt, durch den ein Stössel 8 geführt ist, der im erwähnten Führungskanal gleitend gelagert ist.

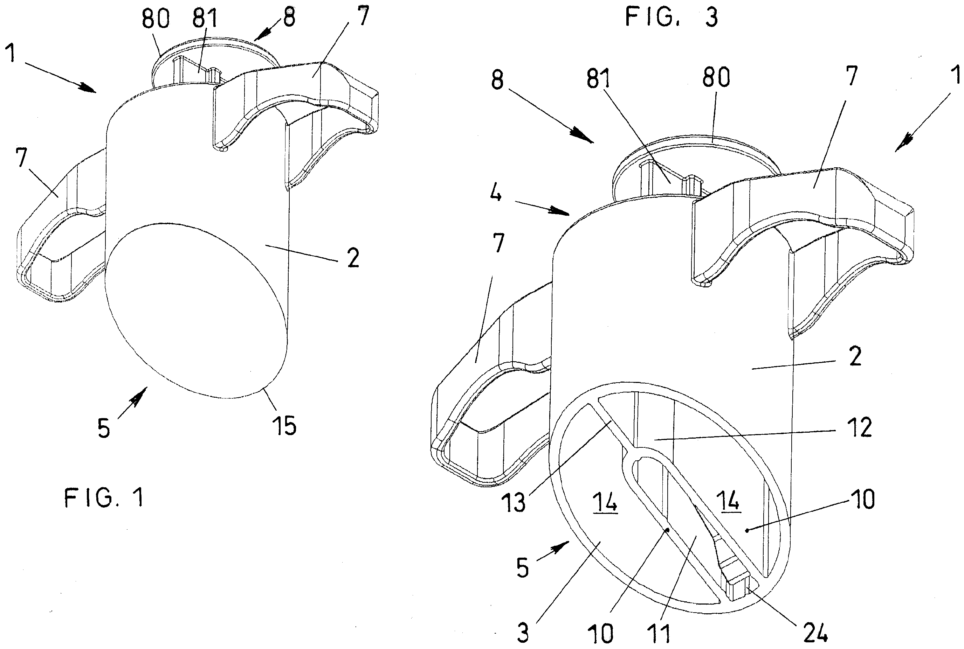

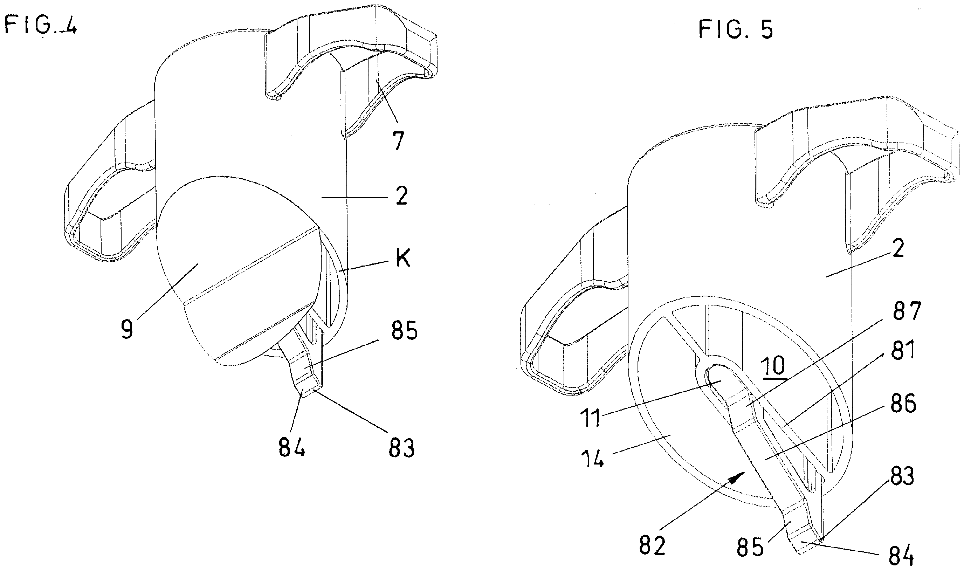

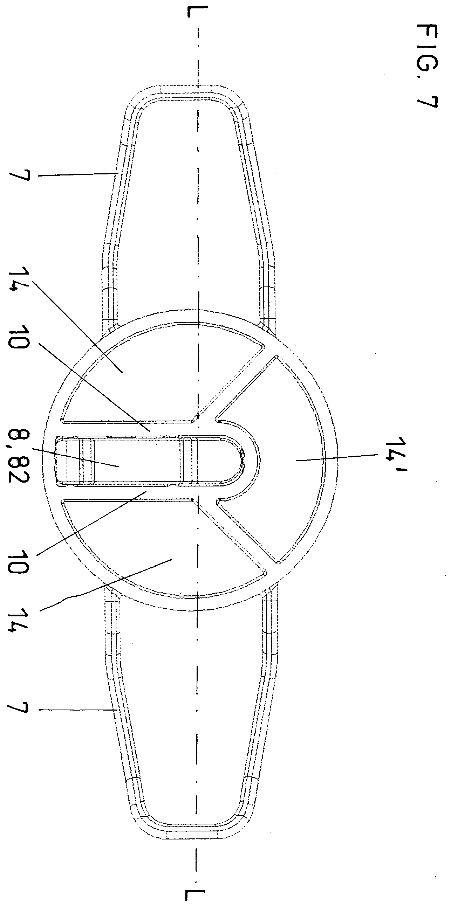

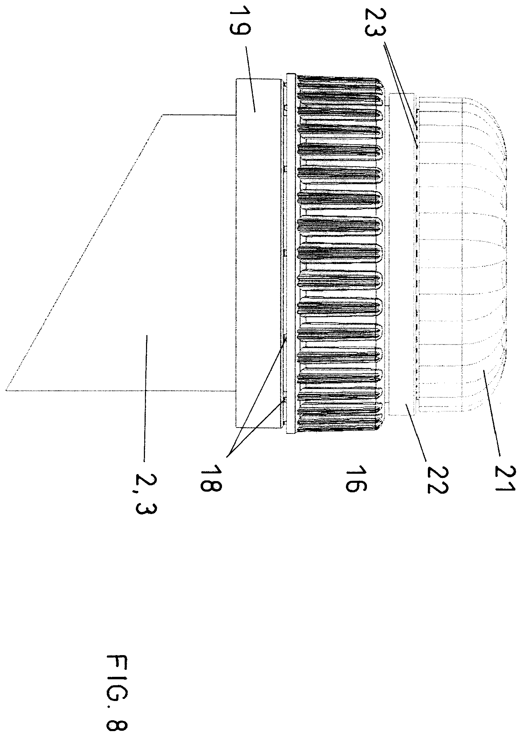

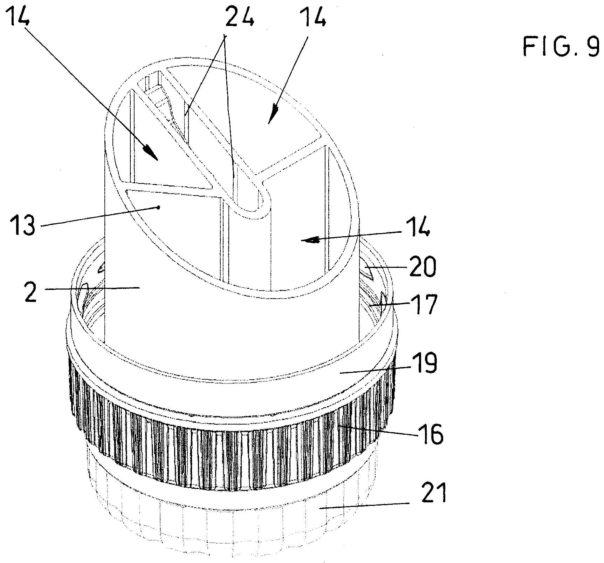

Die Abgabevorrichtung 1 kann für sich alleine verwendet werden, also ohne Zusammenhang und Verbindung mit einem Behälter, oder so gestaltet sein, dass diese Abgabevorrichtung als Schraubdeckel für einen Behälter gestaltet ist. Letztere Version wird später mit Bezug auf die Figuren 8 und 9 beschrieben. Bei den Ausführungen gemäss den Figuren 1 - 7 ist die Abgabevorrichtung jedoch als ein von einem Behälter unabhängiger Teil konstruiert und weist entsprechend auf der Aussenseite der umlaufenden Mantelwand 2 zwei einander diametral gegenüberliegend angeordnete Griffelemente 7 auf. Die hier gezeigte Ausführungsform der Griffelemente 7 sind lediglich eine mögliche und bevorzugte Ausführungsform die besonders für eine einhändig zu betätigende Abgabevorrichtung geeignet ist.

Hier sei insbesondere darauf hingewiesen, dass die vorliegende, erfindungsgemässe Abgabevorrichtung besonders zur Abgabe von sehr geringen Mengen von flüssigen oder schüttbaren Stoffen geeignet ist. Insbesondere für Spritzmittel, wie Pestizide, Fungizide oder Düngemittel werden sehr geringe Mengen von Wirkstoffen in sehr grossen Mengen einer flüssigen Phase, insbesondere in Wasser abgegeben. In solchen Fällen ist es unsinnig nun die Abgabevorrichtung mit einem Behälter als Einheit zu verkaufen, da ansonsten, beispielsweise wenige Gramm oder wenige Milliliter Wirkstoffe vielen Litern von Wasser beigegeben wird.

In den Beispielen gemäss den Figuren 1 - 7 sind die Griffelemente 7 henkelartig gestaltet, um die Abgabevorrichtung zwischen Zeigefinger und Mittelfinger zu halten und mit dem Daumen einen Stössel 8 zu betätigen.

Auf der Ausstossseite 5 ist der Abgaberaum 3 mittels einer reissfesten Folie 9 vor der Erstbenutzung verschlossen. Diese reissfeste Folie 9 besteht bevorzugterweise aus einer Kunststofffolie, wobei hier insbesondere Kunststoffe aus der Gruppe PP, PE, PET oder HDPE in Frage kommen. Insbesondere kommen aber aus den Kunststoffen gefertigte Verbundfolien in Frage, die mit einer Aluminiumfolie kombiniert sein können, oder auch eine Folie aus den erwähnten Kunststoffen, die mit Metall bedampft ist. Die erforderliche Reissfestigkeit weisen Kunststoffe auf, die eine Zugfestigkeit von 70 oder mehr MPa haben. Hierbei wird man hier zäh-harte Kunststoffe wählen, die eine geringe Streckdehnung bei hoher Streckspannung haben.

Im Abgaberaum 3 verlaufen in axial und diametraler Richtung zwei parallele Führungswände 10, die einen allseitig zum Abgaberaum 3 geschlossenen Führungskanal bilden. Die Führungswände 10 sind auf der Innenseite der umlaufenden Mantelwand 2 angeformt. An den der Mantelwand 2 gegenüberliegenden Enden sind die beiden parallelen Führungswände 10 durch eine Abschlusswand 12 zum erwähnten, geschlossenen Führungskanal 11 abgeschlossen. Die Abschlusswand 12 kann plan, oder wie hier dargestellt, im Querschnitt bogenförmig verlaufend gestaltet sein. Der Führungskanal 11 dient der Führung eines kolbenförmigen Stössels 8 der nachfolgend noch genauer beschrieben wird.

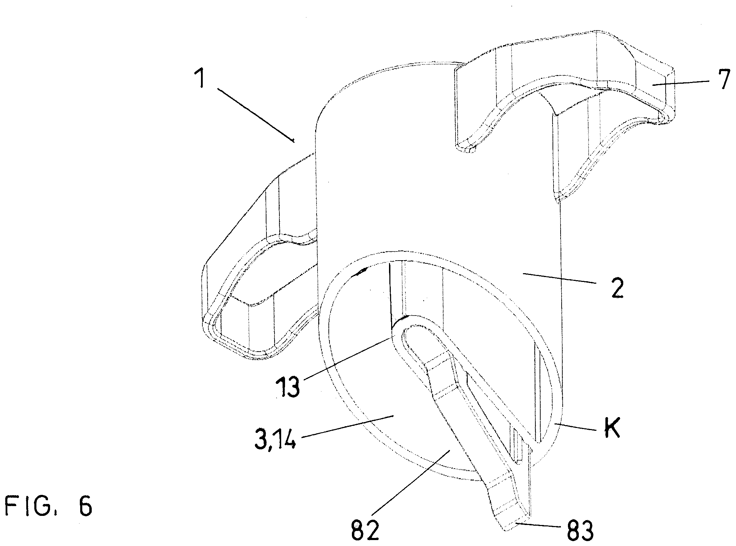

Von der Abschlusswand 12 oder den Führungswänden 10 können sich ein oder mehrere Verbindungswände 13 zur Mantelwand 2 hin erstrecken. Diese Verbindungswände 13 verlaufen in axialer Richtung und sind einstückig, einerseits mit der umlaufenden Mantelwand 2 und andererseits mit einer der Führungswände 10 oder der Abschlusswand 12, verbunden. Diese Verbindungswände 13 teilen den Abgaberaum 3 in verschiedene Kammern 14 auf. Diese Kammern 14 können, wie in der Figur 3 dargestellt, gleich gross sein, wenn sich die Verbindungswand 13 von der Mitte der Abschlusswand 12 parallel zu den beiden Führungswänden 10 zur umlaufenden Mantelwand erstreckt. Verläuft die eine oder mehrere Verbindungswände 13 jedoch anders, so ergeben sich Kammern 14 die zur Aufnahme unterschiedlicher Volumen geeignet sind. Ist keine solche Verbindungswand 13 vorhanden, so bildet der gesamte Aufnahmeraum 3 eine einzige Kammer. Eine solche Lösung ist in der Figur 6 dargestellt.

Wie bereits erwähnt kann der Abgaberaum 3 durch eine rohrförmige Mantelwand 2 gebildet sein, die zylindrisch ist. Hierbei wird besonders bevorzugt, diese abgabeseitig geneigt zur Längsachse geschnitten zu gestalten. In diesem Falle bildet die Mantelwand 2 eine Spitze 15 und die beiden Führungswände 10 sind im Bereich dieser Spitze 15 an der umlaufenden Mantelwand angeformt. In diesem Falle verlaufen nicht nur die umlaufende Mantelwand 2, sondern selbstverständlich auch die Führungswände 10 und die gegebenenfalls vorhandenen Verbindungswände 13 auf der Ausstossseite 5 in derselben Schnittebene. Dies hat noch weitere Vorteile, die im Zusammenhang mit der Ausbildung des Stössels 8 noch weiter beschrieben werden.

Für jene Fälle, in denen beispielsweise relativ hohe Konzentrationen des abzugebenden Wirkstoffes in eine relativ kleine Menge der flüssigen Phase abgegeben werden soll, kann es selbstverständlich auch sinnvoll sein, die erfindungsgemässe Abgabevorrichtung so auszugestalten, dass diese auf einem Behälter anbringbar ist. In diesem Falle kann selbstverständlich auf die Griffelemente 7 verzichtet werden. Stattdessen ist im oberen, der Deckplatte 6 nahen Bereich an der umlaufenden Mantelwand 2 ein umlaufender, schürzenförmig, konzentrisch zur umlaufenden Wand verlaufender Kragen 16 angeformt. Dieser umlaufende Kragen 16 ist mit einem Innengewinde 17 versehen, das mit einem Aussengewinde eines Ausgusses, eines hier nicht dargestellten Behälters, verbindbar ist. Unterhalb des umlaufenden Kragens und mit diesem fluchtend ist über Sollbruchstellen 18 ein Garantieband 19 angeformt. Das Garantieband 19 weist auf der Innenseite Haltenocken 20 auf. Damit ist die Abgabevorrichtung gesichert auf einem Behälter montierbar.

Um auch noch sicherzustellen, dass die Abgabevorrichtung nicht ungewollt oder mutwillig vor dem Verkauf betätigt oder manipuliert wird ist oberhalb des Kragens 16, an diesem ein nach oben gerichteter, an der Aussenseite mit Zähnen versehene Ringwand angeformt und ein Deckel 21 aufgesetzt.

Dieser Deckel 21 besitzt einen angeformten Sicherungsring 22. Dieser Sicherungsring 22 besitzt eine Innenverzahnung, die ein Abdrehen des Deckels 21 verunmöglicht. Der Sicherungsring 22 ist über Sollbruchstellen 23 mit dem Deckel 21 verbunden. Damit ist der Zugriff zum Stössel 8 nur möglich, wenn der Deckel 21 unter Zerstörung der Sollbruchstellen 23 abgedreht wird. Da die Sollbruchstellen 23 die einzige Verbindung zwischen dem Sicherungsring 22 und dem Deckel 21 sind, lässt sich dieser nach der erstmaligen Entfernung nicht mehr aufsetzen. Nun kann man den Stössel 8 betätigen. Der eingedrückte Stössel 8 taucht dabei unterhalb des Niveaus jener umlaufenden Wand ein, an dem der Sicherungsring 22 gehalten ist. Dies verunmöglicht es praktisch um den Stössel danach wieder nach oben zu ziehen. Die Abgabevorrichtung ist so weitgehend manipuliersicher.

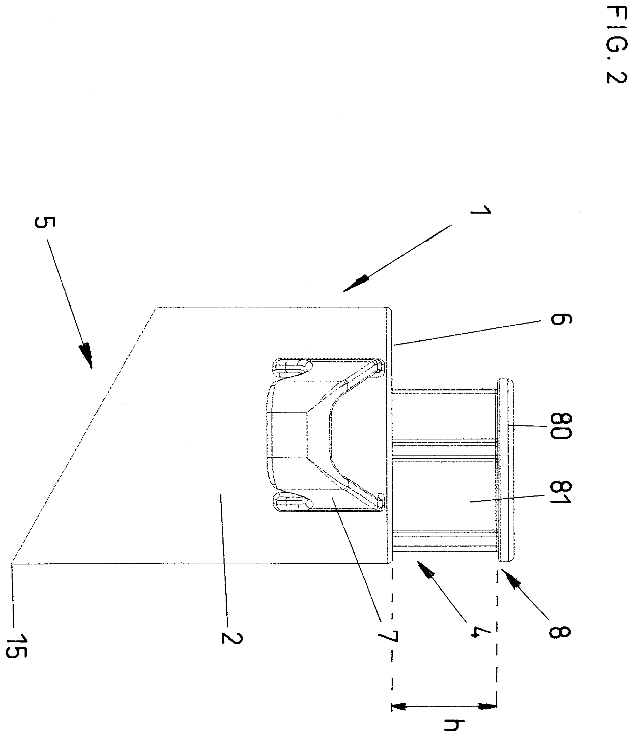

Der Stössel 8 ist in Bezug auf die Gestaltung seines oberen Teiles aus den Figuren 2 und 3 ersichtlich. Der Stössel 8 besteht aus zwei einstückig miteinander geformten Teilen, nämlich einer Druckplatte 80 und einem daran unten anschliessenden, senkrecht zur Druckplatte verlaufenden, plattenförmigen Körper 81. Der plattenförmige Körper 81 ist um einen Hubweg h länger als der Führungskanal 11.

In den Figuren 1 - 3 ist die Abgabevorrichtung 1 in der Position vor der Erstbenutzung dargestellt. Die Druckplatte 80 des Stössels 8 überragt die Deckplatte 6 der Abgabevorrichtung 1 um den erwähnten Hubweg h den der Stössel 8 zurücklegen soll. Dieser Hubweg ist in der Figur 2 eingezeichnet. Der plattenförmige Körper 81 des Stössels 8 kann im Prinzip den Führungskanal 11 vollständig füllen. Auf jeden Fall ragt der Stössel 8 bzw. dessen plattenförmiger Körper 81 vor der Erstbenutzung nicht aus dem Führungskanal 11 an der Ausstossseite 5 hinaus. Der plattenförmige Körper 81 kann im Prinzip im Querschnitt dem Querschnitt des Führungskanales 11 entsprechen. Da jedoch eine flächige Auflage, einerseits die Reibung und andererseits auch die erforderliche Präzision erhöht, werden hier insbesondere an den Führungswänden 10 des Führungskanales 11 Gleitrippen 24 vorgesehen, um so die miteinander in Kontakt stehenden Flächen zu reduzieren. Auch am plattenförmigen Körper 81 des Stössels 8 können entsprechende Gleitrippen angebracht sein.

Ausstossseitig ist der Stössel 8 an der zur Folie hin gerichteten Seite mit einer rampenförmigen Aufstossfläche 82 versehen. Diese rampenförmige Aufstossfläche 82 endet in einer Spitze bzw. an der Schmalseite in eine Kante 83. Die Spitze 83 bzw. die Kante 83 beläuft direkt entlang jenem Teil der Mantelwand der zwischen den beiden Führungswänden 10 verläuft. Dies bewirkt, dass die reissfeste Folie 9 bei der Betätigung des Stössels 8 nur mittels dieser Kante 83 unter Trennung der Schweissnaht zwischen der reissfesten Folie 9 und der unteren Kante K der Mantelwand 2 angehoben wird. Diese Trennung erfolgt bei einer Lösung bei der die Ausstossseite 5 geneigt zur Längsachse des Abgaberaumes 3 im Bereich der Spitze 15 der Mantelwand 2. Die stumpf gestaltete Spitze 83 des plattenförmigen Körpers 81 ist so gestaltet, dass deren Breite in diametraler Richtung geringer ist, als die Wandstärke der Mantelwand in diesem Bereich.

Der Kante 83 bzw. Spitze folgt an der rampenförmigen Ausstossfläche 82 eine erste Teilfläche 84, die mindestens annähernd dieselbe Neigung aufweist, wie die Ebene, welche die untere Kante K der Mantelwand 2 aufspannt, falls die Mantelwand geneigt zur Längsachse geschnitten ist. Diese Neigung beträgt zwischen 30° und 60°, bevorzugt 45°. Die erste Teilfläche 84 erwirkt somit die Trennung der reissfesten Folie 9 von der Mantelwand 2 im Bereich in dem die Kante 83 wirksam ist. Der ersten Teilfläche 84 folgt eine zweite, steilere Teilfläche 85. Diese zweite Teilfläche dient vor allem dazu, den bereits von der Mantelwand 2 gelösten Teil der reissfesten Folie 9 umzubiegen, so dass nun bereits die Kammer 14 oder die Kammern 14, die in diesem Bereich angrenzen, sich zu entleeren beginnen können. Der zweiten, steileren Teilflächen 85 der rampenförmigen Ausstossfläche 82 folgt eine dritte Teilfläche 86, die genau gleich geneigt ist wie die erste Teilfläche oder mindestens annähernd dieselbe Neigung aufweist wie die erste Teilfläche. Schliesslich folgt noch eine vierte Teilfläche 87, die wiederum so steil ist wie die zweite Teilfläche 85 und als Rückhaltefläche für die reissfeste Folie 9 dient, wenn der Stössel 8 vollständig in die untere Endposition gelangt ist. Ist der Stössel 8 vollständig nach unten gedrückt, so ist die reissfeste Folie 9 ungefähr mit ihrem halben Umfang von der Mantelwand gelöst. Im Normalfall ist nun der Abgaberaum 3 bzw. deren Kammern 14 vollständig entleert. Da die reissfeste Folie 9 nicht vollständig vom Abgaberaum 3 getrennt wird, kann diese auch nicht in die flüssige Phase fallen in der die abgegebenen Stoffe gelangen.

Je nach Verlauf der Verbindungswände 13 ist es möglich, dass eine oder mehrere Kammern 14' noch vollständig geschlossen sind, da diese von der ersten, halb abgestossenen, reissfesten Folien 9 noch verschlossen sind. Dies ist beispielsweise dann sinnvoll, wenn eine abzugebende Komponente erst zugegeben werden soll, wenn eine andere oder mehrere andere abgegebene Stoffe in der flüssigen Phase aufgelöst sind. Der Anwender kann also nun die Abgabevorrichtung mittels des Stössels 8 öffnen, die erst abzugebenden Stoffe in einer flüssigen Phase einströmen lassen, dann diese flüssige Phase mit den eingestreuten Stoffen vermischen und schliesslich die erst halb abgetrennte, reissfeste Folie 9 von Hand vollständig abziehen und die noch nicht entleerte oder entleerten Kammer 14' bzw. Kammern entleeren.

Obwohl hier nicht ersichtlich, ist es sinnvoll die Abgabevorrichtung 1 mit Arretierungsmittel zu versehen, mit den der Stössel 8 vor der Erstbenutzung gesichert gehalten werden kann, so dass nicht bereits bei einem unbeabsichtigten Druck auf die Druckplatte 80 des Stössels 8 sogleich die reissfeste Folie 9 von der Mantelwand teilweise gelöst wird. Solche Arretierungsmittel können beispielsweise gewisse Erhebungen oder Vertiefungen am plattenförmigen Körper 81 des Stössels 8 sein, die mit gegengleichen Erhebungen oder Vertiefungen an den Führungswänden 10 des Führungskanales 11 angeordnet sind. Erst wenn die erforderliche Kraft aufgebracht wird um diese Arretierungsmittel zu trennen, wird der Stössel 8 auf die reissfeste Folie 9 geführt. Eine weitere, äusserst einfache Lösung besteht darin ,dass zwischen der Druckplatte 80 des Stössels 8 und der Deckplatte 6 des Abgaberaumes 3 ein etwa c-förmig gestaltetes, loses Element eingeschoben wird, das genau so hoch ist, wie der Hubweg h. Erst wenn dieser c-förmige Teil entfernt worden ist, lässt sich der Stössel betätigen. Ist jedoch ein Deckel 21 vorgesehen, der den Zugriff auf den Stössel 8 vor dessen Abtrennung verunmöglicht, dann erübrigen sich solche Arretierungsmittel.

### Bezugszeichenliste:

- 1: Abgabevorrichtung
- 2: umlaufende Mantelwand
- 3: Abgaberaum
- 4: Deckseite
- 5: Ausstosssite
- 6: Deckplatte
- 7: Griffelement
- 8: Stössel
- 9: reissfeste Folie
- 10: Führungswände
- 11: Führungskanal
- 12: Abschlusswand
- 13: Verbindungswände
- 14: Kammern; 14' Kammer
- 15: Spitze der Mantelwand
- 16: Kragen
- 17: Innengewinde
- 18: Sollbruchstellen
- 19: Garantieband
- 20: Haltenocken
- 21: Deckel
- 22: Sicherunsring
- 23: Sollbruchstellen
- 24: Gleitrippen
- h: Hubweg
- K: Kante der Mantelwand
- 80: Druckplatte
- 81: plattenförmiger Körper
- 82: rampenförmige Aufstossfläche
- 83: Kante bzw. Spitze
- 84: erste Teilfläche
- 85: zweite steilere Teilfläche
- 86: dritte Teilfläche
- 87: vierte Teilfläche

## Patentansprüche

1. Abgabevorrichtung (1) mit einer umlaufenden Mantelwand (2) die einen rohrförmigen Abgaberaum (3) mit einer Deckseite (4) und einer Ausstossseite (5) bildet, mit mindestens einer Kammer (14), die je mit mindestens einem flüssigen oder schüttfähigen, dosierten Stoff zur Abgabe füllbar ist, **dadurch gekennzeichnet, dass** im Abgaberaum (3) ein in achsialer Richtung verlaufender, aus Führungswänden (10) bestehender und allseitig zum Abgaberaum (3) geschlossener Führungskanal (11) verläuft, der sich bis zum tiefsten Punkt des rohrförmigen Abgaberaums (3) erstreckt, wobei in den in achsialer Richtung beidseitig offenen Führungskanal (11) ein kolbenartiger Stössel (8) lagert, der länger ist als der Führungskanal (11), und dass ferner alle Wände (2, 10, 13) auf der Ausstossseite (5) in einer gemeinsamen Ebene enden und auf diesen Wänden eine reissfeste Folie (9) aufgeschweisst oder geklebt ist, die sich mittels des Stössels (8) von einem Punkt der Mantelwand (2) aus beginnend zur Entleerung der mindestens einen Kammer (14) mindestens teilweise abstossbar ist.

2. Abgabevorrichtung (1) nach Anspruch 1, **dadurch gekennzeichnet, dass** der Abgaberaum (3) durch eine Verbindungswand (13) zwischen dem geschlossenen Führungskanal (11) und der Mantelwand (2) des Abgaberaums (3) in zwei Kammern (14) unterteilt ist.

3. Abgabevorrichtung (1) nach Anspruch 1, **dadurch gekennzeichnet, dass** der Abgaberaum (3) durch zwei Verbindungswände (13) die von zwei einander gegenüberliegenden Führungswände des Führungskanals zur umlaufenden Mantelwand (10) des Abgaberaums (3) sich erstrecken, in mehrere Kammern(14, 14') unterteilt ist.

4. Abgabevorrichtung (1) nach Anspruch 1, **dadurch gekennzeichnet, dass** die Mantelwand (2) und die Führungswände (10) des Führungskanals (11) sowie die gegebenenfalls vorhandenen Verbindungswände (13) geneigt zur Längsachse geschnitten sind und in der so gebildeten Schnittebene enden, wobei die beiden Führungswände (10) des Führungskanals zur gebildeten Spitze (15) der Mantelwand (2) des Abgaberaums (3) hin verlaufen.

5. Abgabevorrichtung (1) nach Anspruch 1, **dadurch gekennzeichnet, dass** an der Aussenseite der Mantelwand (2) zwei einander diametral gegenüberliegende Griffelemente (7) vorgesehen sind.

6. Abgabevorrichtung (1) nach Anspruch 1, **dadurch gekennzeichnet, dass** die reissfeste Folie (9) aus einem Kunststoff aus PE, PP, PET oder HDPE oder eine darauf gefertigte Verbundfolie besteht.

7. Abgabevorrichtung (1) nach Anspruch 6, **dadurch gekennzeichnet, dass** die reissfeste Folie (9) eine metallbedampfte Beschichtung aufweist.

8. Abgabevorrichtung (1) nach Anspruch 1, **dadurch gekennzeichnet, dass** der Stössel (8) auf der zur Folie hin gerichteten Seite eine rampenförmige Aufstossfläche (82) aufweist, die so geneigt verläuft, dass die Spitze (83) des Stössels (8) auf der der Mantelwand (2) zugerichteten Seite die abzustossende reissfeste Folie (9) zuerst berührt.

9. Abgabevorrichtung (1) nach Anspruch 8, **dadurch gekennzeichnet, dass** die rampenförmige Aufstossfläche (82) eine stumpfe Spitze oder Kante (83) aufweist.

10. Abgabevorrichtung (1) nach Anspruch 9, **dadurch gekennzeichnet, dass** die Breite der stumpfen Spitze (83) in diametraler Richtung geringer ist als die Wandstärke der Mantelwand (2).

11. Abgabevorrichtung (1) nach den Ansprüchen 4 und 8, **dadurch gekennzeichnet, dass** die rampenförmige Aufstossfläche (82) nach der Spitze (83) eine erste Teilfläche (84) aufweist, die mindestens annähernd dieselbe Neigung aufweist wie die Schnittebene.

12. Abgabevorrichtung (1) nach Anspruch 11, **dadurch gekennzeichnet, dass** der ersten Teilfläche (84) der rampenförmigen Aufstossfläche (82) eine zweite, steilere Teilfläche (85) folgt und an dieser eine dritte Teilfläche (86) anschliesst, die mindestens annähernd dieselbe Neigung hat wie die erste Teilfläche (84).

13. Abgabevorrichtung (1) nach Anspruch 12, **dadurch gekennzeichnet, dass** die dritte Teilfläche (86) der rampenförmigen Aufstossfläche (82) eine vierte Teilfläche (87) aufweist, die mindestens annähernd dieselbe Neigung aufweist wie die zweite Teilfläche (85) und als Rückhaltefläche für den abgestossenen Teil der reissfesten Folie (9) dient.

14. Abgabevorrichtung (1) nach Anspruch 1, **dadurch gekennzeichnet, dass** der Abgaberaum (3) auf der der Ausstossseite (5) gegenüberliegenden Deckseite (4) mit einer Deckplatte (6) mit Durchführungsöffnung für den Stössel (8) verschlossen ist, wobei die Deckplatte (6) einstückig mit der Mantelwand (2) verbunden oder zweistückig daran befestigbar gefertigt ist.

15. Abgabevorrichtung (1) nach Anspruch 1, **dadurch gekennzeichnet, dass** der Stössel (8) an den zu den Führungswänden (10) des Führungskanals (11) hin gerichteten Seiten Gleitrippen aufweist.

16. Abgabevorrichtung (1) nach Anspruch 1, **dadurch gekennzeichnet, dass** am Stössel (8) ein Arretiermittel angeformt ist, welches mit einem zweiten Arretiermittel, das an mindestens einer der beiden den Führungskanal begrenzenden Wänden angeformt ist, in einer vor der Erstbenutzung gesicherten Lage form- und/oder kraftschlüssig gehalten ist.

## Claims

1. A dispensing device (1) having a peripheral jacket (2), which forms a tubular dispensing space (3) with a cover side (4) and a discharge side (5), with at least one chamber (14), which can be filled with at least one liquid or pourable metered substance for dispensing, **characterized in that** a guide channel (11), which consists of guide walls (10) and is closed on all sides with respect to the dispensing space (3), runs in the axial direction in the dispensing space (3), extending as far as the lowest point in the tubular dispensing space (3), wherein a piston-like ram (8), which is longer than the guide channel (11), is mounted in the guide channel (11) that is open on both sides in the axial direction, and furthermore all the walls (2, 10, 13) on the discharge side (5) end in a common plane and a tear-resistant film (9) is welded or glued onto these walls, so that it can be pushed off at least partially by means of the ram (8) beginning at a point on the jacketed wall (2), for emptying the at least one chamber (14).

2. The dispensing device (1) according to claim 1, **characterized in that** the dispensing space (3) is subdivided into two chambers (14) by a connecting wall (13) between the closed guide channel (11) and the jacketed wall (2) of the dispensing space (3) .

3. The dispensing device (1) according to claim 1, **characterized in that** the dispensing space (3) is subdivided by two connecting walls (13) into multiple chambers (14, 14'), and the connecting walls extend from two opposite guide walls of the guide channel to the peripheral jacketed wall (10) of the dispensing space (3).

4. The dispensing device (1) according to claim 1, **characterized in that** the jacketed wall (2) and the guide walls (10) of the guide channel (11) as well as the connecting walls (13), which may optionally be present, are cut at an inclination to the longitudinal axis, ending in the sectional plane thereby formed, wherein the two guide walls (10) of the guide channel run toward the tip (15) thereby formed on the jacketed wall (2) of the dispensing space (3).

5. The dispensing device (1) according to claim 1, **characterized in that** two diametrically opposed handle elements (7) are provided on the outside of the jacketed wall (2).

6. The dispensing device (1) according to claim 1, **characterized in that** the tear-resistant film (9) is made of a plastic such as PE, PP, PET or HDPE or a composite film produced thereon.

7. The dispensing device (1) according to claim 6, **characterized in that** the tear-resistant film (9) has a metallized coating.

8. The dispensing device (1) according to claim 1, **characterized in that** the ram (8) has a ramp-type push-open area (82) on the side facing the film and running at an inclination so that the tip (83) of the ram (8) on the side facing the jacketed wall (2) first touches the tear-resistant film (9) to be pushed off.

9. The dispensing device (1) according to claim 8, **characterized in that** the ramp-type push-open surface (82) has a blunt tip or edge (83).

10. The dispensing device (1) according to claim 9, **characterized in that** the width of the blunt tip (83) is smaller in the diametric direction than the wall thickness of the jacketed wall (2).

11. The dispensing device (1) according to claims 4 and 8, **characterized in that** the ramp-type push-open surface (82) has, after the tip (83), a first partial surface (84), which has at least approximately the same slope as the sectional plane.

12. The dispensing device (1) according to claim 11, **characterized in that** a second steeper partial surface (85) follows the first partial surface (84) of the ramp-type push-open surface (82), and a third partial surface (86) is connected to the former, having at least approximately the same slope as the first partial surface (84).

13. The dispensing device (1) according to claim 12, **characterized in that** the third partial surface (86) of the ramp-type push-open surface (82) has a fourth partial surface (87), which has at least approximately the same slope as the second partial surface (85) and serves as a retaining area for the part of the tear-resistant film (9) that is pushed off.

14. The dispensing device (1) according to claim 1, **characterized in that** the dispensing space (3) on the cover side (4) opposite the discharge side (5) is closed with a cover plate (6) with a passage opening for the ram (8), wherein the cover plate (6) is connected in one piece to the jacketed wall (2) or is manufactured in two parts so that it can be attached thereto.

15. The dispensing device (1) according to claim 1, **characterized in that** the ram (8) has sliding ribs on the sides facing the guide walls (10) of the guide channel (11).

16. The dispensing device (1) according to claim 1, **characterized in that** the locking means are formed on the ram (8), held in a form-fitting and/or force-locking manner with a second locking means integrally molded on at least one of the two walls bordering the guide channel, in a secured position prior to the initial use.

## Revendications

1. Dispositif distributeur (1) avec une paroi d'enveloppe (2) périphérique, qui forme un espace distributeur (3) de forme tubulaire, avec un côté couvercle (4) et un côté expulsion (5), avec au moins un compartiment (14) qui peut être rempli respectivement d'au moins une matière dosée liquide ou en vrac pour sa distribution, **caractérisé en ce que** dans l'espace distributeur (3) s'écoule un canal de guidage (11) s'écoulant en direction axiale, composé de parois de guidage (10) et fermé de toutes parts vers l'espace distributeur (3) qui s'étend jusqu'au point le plus bas de l'espace distributeur (3) de forme tubulaire, sachant que dans le canal de guidage (11) ouvert de part et d'autre dans la direction axiale est logé un poussoir (8) de type piston, qui est plus long que le canal de guidage (11) et **en ce que** par ailleurs, toutes les parois (2, 10, 13) du côté expulsion (5) se terminent dans un plan commun et sur lesdites parois est soudé ou collé un film (9) indéchirable, qui au moyen du poussoir (8) peut être repoussé au moins partiellement à partir d'un point de la paroi d'enveloppe (2) pour vider l'au moins un compartiment (14).

2. Dispositif distributeur (1) selon la revendication 1, **caractérisé en ce que** l'espace distributeur (3) est divisé en deux compartiments (14) par une paroi de liaison (13) entre le canal de guidage (11) fermé et la paroi d'enveloppe (2) de l'espace distributeur (3).

3. Dispositif distributeur (1) selon la revendication 1, **caractérisé en ce que** l'espace distributeur (3) est divisé en plusieurs compartiments (14, 14') par deux parois de liaison (13) qui s'étendent à partir de deux parois de guidage opposées du canal de guidage vers la paroi d'enveloppe (10) périphérique de l'espace distributeur (3).

4. Dispositif distributeur (1) selon la revendication 1, **caractérisé en ce que** la paroi d'enveloppe (2) et les parois de guidage (10) du canal de guidage (11), ainsi que les parois de liaison (13) présentes le cas échéant sont coupées en oblique vers l'axe longitudinal et se terminent dans le plan de coupe ainsi créé, les deux parois de guidage (10) du canal de guidage s'écoulant vers la pointe (15) formée de la paroi d'enveloppe (2) de l'espace distributeur (3).

5. Dispositif distributeur (1) selon la revendication 1, **caractérisé en ce que** sur l'autre côté de la paroi d'enveloppe (2) sont prévus deux éléments de préhension (7) diamétralement opposés l'un à l'autre.

6. Dispositif distributeur (1) selon la revendication 1, **caractérisé en ce que** le film (9) indéchirable est composé d'une matière plastique à base de PE, de PP, de PET ou de HDPE ou d'un film composite fabriqué dans ces derniers.

7. Dispositif distributeur (1) selon la revendication 6, **caractérisé en ce que** le film indéchirable (9) comporte un revêtement métallisé.

8. Dispositif distributeur (1) selon la revendication 1, **caractérisé en ce que** sur le côté dirigé vers le film, le poussoir (8) comporte une surface d'expulsion (82) en forme de rampe qui s'écoule en inclinaison, de telle sorte que la pointe (83) du poussoir (8) touche d'abord le film (9) indéchirable sur le côté dirigé vers la paroi d'enveloppe (2) .

9. Dispositif distributeur (1) selon la revendication 8, **caractérisé en ce que** la surface d'expulsion (82) en forme de rampe comporte une pointe ou une arête (83) émoussée.

10. Dispositif distributeur (1) selon la revendication 9, **caractérisé en ce que** dans la direction diamétrale, la largeur de la pointe (83) émoussée est inférieure à l'épaisseur de paroi de la paroi d'enveloppe (2) .

11. Dispositif distributeur (1) selon les revendications 4 et 8, **caractérisé en ce qu'**après la pointe (83), la surface d'expulsion (82) en forme de rampe comporte une première surface partielle (84) qui présente au moins approximativement la même inclinaison qui le plan de coupe.

12. Dispositif distributeur (1) selon la revendication 11, **caractérisé en ce qu'**à la première surface partielle (84) de la surface d'expulsion (82) en forme de rampe fait suite une deuxième surface partielle (85) plus abrupte et sur celle-ci se raccorde une troisième surface partielle (86) qui présente au moins approximativement la même inclinaison que le première surface partielle (84) .

13. Dispositif distributeur (1) selon la revendication 12, **caractérisé en ce que** la troisième surface partielle (86) de la surface d'expulsion (82) en forme de rampe comporte une quatrième surface partielle (87) qui présente au moins approximativement la même inclinaison que la deuxième surface partielle (85) et qui fait office de surface de retenue pour la partie repoussée du film (9) indéchirable.

14. Dispositif distributeur (1) selon la revendication 1, **caractérisé en ce que** sur le côté couvercle (4) opposé au côté expulsion (5), l'espace distributeur (3) est fermé par une plaque de recouvrement (6) munie d'un orifice de passage pour le poussoir (8), la plaque de recouvrement (6) étant reliée en monobloc avec la paroi d'enveloppe (2) ou étant fabriquée en deux parties, en pouvant être fixée.

15. Dispositif distributeur (1) selon la revendication 1, **caractérisé en ce que** sur les côtés dirigés vers les parois de guidage (10) du canal de guidage (11), le poussoir (8) comporte des nervures de coulissement.

16. Dispositif distributeur (1) selon la revendication 1, **caractérisé en ce que** sur le poussoir (8) est surmoulé un moyen de blocage, qui avec un deuxième moyen de blocage qui est surmoulé sur au moins l'une des deux parois délimitant le canal de guidage est maintenu par complémentarité de forme et/ou de force dans une position sécurisée avant la première utilisation.
